# EUROPEAN PATENT APPLICATION

(11) **EP 0 562 434 A2**
(43) Date of publication of application: **29.09.1993**
(21) Application number: 93104333.5
(22) Date of filing: 17.03.1993
(51) Int. Cl.: H02G 5/06, H02G 5/08, H02J 17/00

(54) **Prefabricated modular waveguide for carrying and distributing low- and medium-voltage electric power**

(30) Priority: 23.03.1992 IT TO920242; 20.11.1992 IT TO920940
(71) Applicant: NAXSO TARDITO S.r.L., I-10135 Torino (IT)
(72) Inventor: Bosia, Pierfranco, I-10126 Torino (IT); Salice, Mario, I-10045 Piossasco (Province of Torino) (IT)
(74) Representative: Modiano, Guido, Dr.-Ing.

(57) **Abstract**

The waveguide comprises modular elements, each of which includes ducts (60) which are assembled so as to form a pack and are accommodated, with insulating material (22) interposed, in a metallic protective casing (300) which has a supporting function. The ducts (60) have at least one axial cavity (61,62) which is delimited by walls the thickness of which determines the surface of the current passage section and consequently determines the nominal capacity of the waveguide. The area of the current passage section is increased or reduced in order to correspondingly vary the nominal capacity of the waveguide between preset maximum and minimum values by varying the thickness of the walls toward the inside of the cavity of the ducts, so that the external dimensions of the ducts are constant for all waveguides with capacities comprised between the maximum and minimum values.

## Description

The present invention relates to a prefabricated modular waveguide for carrying and distributing low- and medium-voltage electric power with nominal operating voltages up to 1000 V and nominal currents up to 6000 A.

More precisely, the invention relates to a waveguide of the known type with modular elements, which extends over generic paths, in which each element encloses a plurality of copper or aluminum ducts provided with an insulating sheath which are assembled in a pack and contained within a hollow metallic container which acts not only as protection and as possible ground conductor but also as supporting structure. In these waveguides there are several modular components which are listed hereafter for the sake of nomenclature:
-- straight power-carrying elements in segments of various lengths, comprised between 0.5 and 5 meters;
-- flat and dihedral angular elements;
-- T-shaped elements;
-- cross-shaped and Z-shaped elements;
-- straight distribution elements with taps for removable junction boxes;
-- removable junction boxes with means for engagement with the distribution elements;
-- terminal elements;
-- fixed boxes for connecting end cables and through cables;
-- basic junctions for the mutual connection of the elements and of the cable connection boxes.

In known waveguides of the specified type, ducts are constituted by solid strips of electrolytic copper or aluminum sheathed with a tape of polymeric or elastomeric insulating material which adheres tightly to the metal of the ducts. The cavity of the external casing has dimensions which are substantially equal to those of the pack of insulated ducts, so that said ducts are contained in the casing without appreciable play.

In the junction and connection regions, the terminal portions of the ducts are mutually spaced by bending in order to form spaces which are meant to accommodate both electric junction elements and dielectric insulation elements.

This known arrangement of known waveguides has several drawbacks.

A severe drawback consists of the high overall reactance of the ducts and in the difficulty in eliminating the heat generated by the flow of current.

Another drawback resides in the fact that the dimensions of the external casing are strictly dependent on the useful section of the ducts, so that when the capacity of the waveguide varies, since the useful sections of said ducts vary, the dimensions of the external casing also vary accordingly. This forces to size the casing according to the nominal capacity of the waveguide, with considerable limitations as regards the mass-production of said casing and a consequent increase in costs for manufacturing and storage of semifinished parts.

In order to limit this drawback, identical waveguides arranged electrically in parallel are currently generally used, but this solution considerably increases installation costs and generally entails an irrational and economically disadvantageous use of the material of the ducts.

A further drawback of known waveguides of the specified type is that the overall bulk of the ducts increases considerably at the junctions and/or shunts, where said ducts are mutually spaced apart in order to form the spaces suitable to receive the junction or shunting elements. This in fact forces to vary the profile of the hollow casing at the junctions, with the consequence that said casing cannot be obtained by simply cutting to size constant-profile continuous elements.

Another drawback of known waveguides resides in that the electric connection of the ducts is obtained by overlapping the bare ends of said ducts and that the contact pressure between the ducts is produced by through bolts which pass through the casing of the supporting structure as well and have spacers made of insulating material fitted on their stem.

Correct electric continuity of the conductors requires a substantial contact pressure and therefore a considerable tightening torque for said through bolts, for example 60 or 70 Nm. This torque can damage the insulating spacers and can compromise mutual insulation between the phases and insulation between the phases and the supporting structure. Accordingly, in known waveguides, the production of junctions is troublesome and delicate and must be performed by highly specialized personnel equipped with special tools such as torque wrenches and the like. In any case, since one operates on elements which are outside the casing of the supporting structure, it is difficult to check whether the conductors have been connected correctly inside the casing.

A further drawback of known waveguides resides in the fact that the engagement means of the junction boxes are constituted by forks which are associated with said boxes and are meant to engage the ducts of the distribution element by arranging themselves astride the ducts.

This arrangement not only requires the substantial spacing of the ducts in the engagement regions, so as to avoid accidental short-circuits, but forces to provide considerably large passage openings in the supporting casing of said distribution element; such openings facilitate accidental contact with the ducts, reducing the safety of the system.

Furthermore, during engagement and disengagement the junction box is live.

The aim of the present invention is to eliminate these and other drawbacks of known waveguides.

In particular, an important object of the invention is to provide a modular waveguide with improved efficiency, both in terms of the reduction of reactance and ohmic resistance due to the skin effect, and thus of overall impedance, and in terms of the elimination of operating heat. As a consequence, the electric efficiency of the waveguide according to the invention is considerably increased.

Another particular object of the invention is to provide a waveguide in which the variation in the useful section of the ducts, which is a consequence of the variation in the capacity of the waveguide, does not entail, at least within wide capacity variation limits, any variation in the dimensions of the external casing. Accordingly, said external casing has standard and constant dimensions and shapes and can be mass-produced by using continuous-manufacturing processes, with considerable economic advantages, reduction in the storage of semifinished parts and improved electromechanical characteristics.

Another important and particular object of the invention is to provide a waveguide wherein the spacing of the ducts at the connection and shunting junctions is not required. Consequently, the profile of the external casing of the waveguide according to the invention is constant even at said junctions and shunts, and this facilitates the manufacture of straight waveguide elements of different lengths in which the external casing is obtained by simple cutting to size of the elements obtained with said continuous-manufacturing processes.

A further object of the invention is to provide a modular waveguide with straight distribution elements equipped with taps for junction boxes which are highly safe as a consequence of the reduced size of the engagement openings and in which the junction boxes are provided with engagement elements which allow maneuvers for engagement and disengagement without removing power.

According to the present invention, this aim, these objects and others which will become apparent from the following description are achieved by providing a prefabricated modular waveguide for carrying and distributing electric power, which comprises straight segments and angular elements which can be variously composed, each comprising ducts which are assembled in a pack and are accommodated, with the interposition of insulating material, in a metallic protective casing which has a supporting function, characterized in that the ducts have at least one axial cavity delimited by walls the thickness of which determines the surface of the current passage section and consequently the capacity of the waveguide; in that the area of said current passage section is increased or reduced in order to correspondingly vary the nominal capacity of the waveguide between preset maximum and minimum values by varying the thickness of the walls toward the inside of the cavity of the ducts so that the external dimensions of said ducts are constant for all waveguides with capacities comprised between said maximum and minimum values; in that the empty space which corresponds to the cavity of the ducts is used to accommodate a pack of electric connection inserts which are interposed between the facing ducts of adjacent modular elements; said pack of inserts consequently having overall transverse dimensions substantially equal to the transverse dimensions of the duct pack; and in that the protective casing which contains the ducts is formed by a pair of mirror-symmetrical and oppositely arranged half-shell elements which have a standardized profile and constant dimensions, within said maximum and minimum capacity values, which correspond to the invariant external dimensions of said duct pack; said half-shell elements being mutually connected by removable connection means.

According to a more general embodiment of the invention, each hollow duct has an annular rectangular cross-section, and on each connectable end of the duct there is at least one opening for communication with the cavity of the ducts; said opening is formed by removing material on at least one of the smaller faces of the duct in order to allow the passage of a corresponding electric connection insert which is accommodated in the cavity of the bar.

According to a preferred embodiment of the invention, which is particularly advantageous for reducing the overall impedance of the waveguide, each duct of the waveguide has two parallel and overlapping axial cavities linked by a solid central rib. The cross-section of each duct thus substantially assumes the shape of the numeral 8, and the magnetic fields generated by the flow of current, by surrounding each cavity, cancel each other out, with the result that line impedance is significantly reduced and the heating of the ducts during operation is also consequently significantly reduced.

The invention provides for the use of ducts with parallel overlapping cavities made of both aluminum and electrolytic copper; the first are usually obtained by extrusion, whereas the second ones can be obtained either by extrusion, if they have a modest thickness, or by juxtaposing a pair of mirror-symmetrical half-bars, each one in turn obtained by plastic deformation, for example by roll forming, from a corresponding strip or by direct extrusion from a billet.

In the second case, each half-bar is provided with two corresponding half-cavities which are linked by a flat portion, and the two juxtaposed half-bars are mutually connected by nails or bolts which pass through holes provided in said flat portions.

The ends of each duct with overlapping parallel cavities are flattened so as to cooperate with respective junctions formed by a pack of conducting plates, mutually spaced by insulating spacers, which externally clamp said ends of the ducts by virtue of the traction of bolts which pass through said pack of plates and spacers.

According to another characteristic of the invention, the metallic external casing is formed by two mirror-symmetrical half-shells made of extruded aluminum, each one of which delimits the cavity for containing the ducts and two oppositely arranged T-shaped ridges which stiffen the structure of the casing against flexing; cooling fins are formed on the external lateral surface of each one of the half-shells.

Further characteristics, purposes and advantages of the invention will become apparent from the following detailed description and with reference to the accompanying exemplifying drawings, wherein:
figure 1 is a partially exploded perspective view of a modular waveguide according to an embodiment of the invention, with straight elements, basic junctions, flat and dihedral angular elements, T-shaped and cross-shaped elements and connection boxes for end cables and through cables;
figure 2 is a perspective detail view of the composition of a straight element of the waveguide of figure 1;
figure 2a is an enlarged-scale view of a detail of figure 2;
figure 2b is an enlarged-scale sectional view, taken along the plane IIb-IIb of figure 2a;
figure 3 is an exploded perspective detail view of a basic junction interposed between two straight elements of the waveguide of figure 1;
figure 4 is an enlarged-scale detail view of figure 3;
figure 5 is a perspective detail view of an electrical connection insert of the basic junction of figure 3;
figure 6 is an exploded perspective view of particular elements of the basic junction of figure 3;
figure 7 is a detailed perspective view of a flat angular element of the waveguide of figure 1;
figure 8 is a perspective view of the method for connecting the ducts of the angular element of figure 7;
figure 9 is a detailed perspective view of a dihedral angular element of the waveguide of figure 1;
figure 10 is a perspective view of the method for connecting the ducts of the angular element of figure 9;
figure 11 is a perspective view of a cross-shaped modular element of the waveguide of figure 1;
figure 12 is a perspective view of the method for connecting the ducts of the cross-like element of figure 11;
figure 13 is an enlarged-scale detail view of a through cable connection box of the waveguide of figure 1;
figure 14 is a perspective view of the ducts of the box of figure 13;
figure 15 is an enlarged-scale detail view of an end cable connection box of the waveguide of figure 1;
figure 16 is a front elevation view of a higher-capacity waveguide which is the result of the parallel electromechanical connection of pairs of waveguide elements according to figure 1, arranged so that they are mutually superimposed;
figure 17 is an exploded perspective view of a junction for connecting the waveguides arranged in parallel and with superimposed elements of figure 16;
figure 17a is an exploded perspective view of a junction for connecting waveguides in parallel according to an alternative arrangement, wherein the waveguide elements are side by side instead of superimposed;
figure 18 is a perspective view of a duct according to another embodiment of the invention;
figures 19 to 22 are perspective view of respective mutual connections of the ducts of figure 18;
figure 23 is a partial and partially sectional perspective view of a straight modular segment of the waveguide, including ducts according to the embodiment of figure 18;
figure 24 is a perspective view, similar to figure 23, illustrating the detail of the junction end of the segment of figure 23;
figure 25 is a transverse sectional view of the modular segment, taken along the plane XXV-XXV of figure 23;
figure 26 is an exploded perspective view of a junction for mutually connecting two waveguide segments according to the embodiment of figure 23;
figure 27 is a transverse sectional view of the waveguide, taken at the junction of figure 26;
figure 28 is a perspective view of a straight modular distribution element;
figure 29 is a partially sectional perspective view of a distribution box associated with the distribution element of figure 28;
figure 30 is a sectional view, taken along the plane XXX-XXX of figure 29;
figure 31 is an exploded perspective view of a duct according to a further embodiment of the invention;
figure 32 is an exploded perspective detail view of a suspension bracket for the straight modular element of figure 2 or of figure 23;
figure 33 is an exploded perspective view of an embodiment of said suspension bracket for the straight modular element of figure 2 or of figure 23;
figure 34 is a transverse sectional view of the waveguide, taken at the bracket of figure 33.

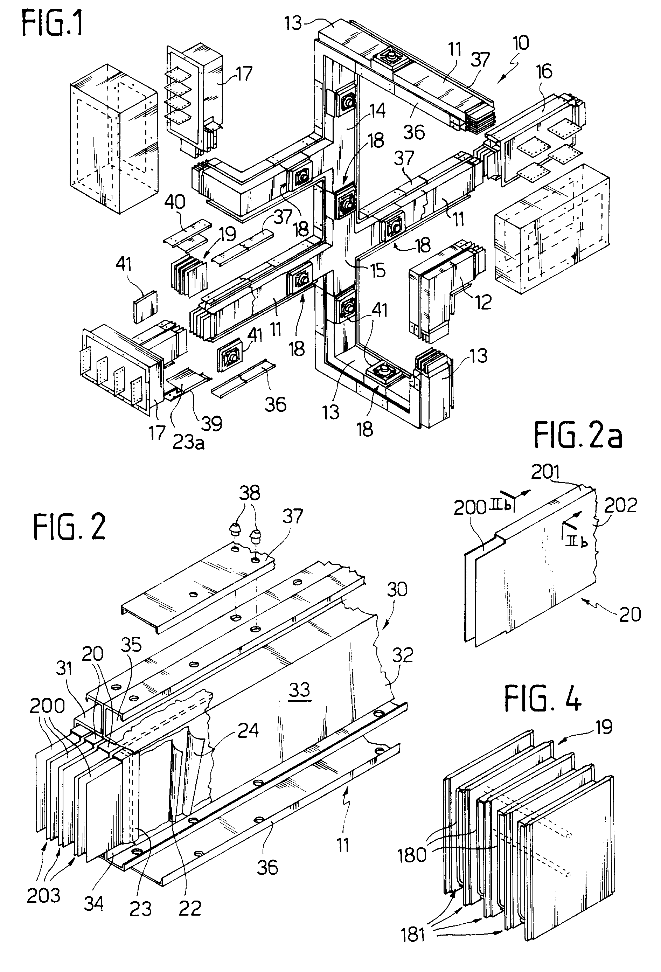

In figure 1, the reference numeral 10 generally designates a waveguide according to the invention, formed by composing a plurality of modular elements which are specified hereafter:
-- straight segments 11 for carrying power, provided in portions of different lengths comprised between 0.5 and 5 meters;
-- flat angular elements 12;
-- dihedral angular elements 13;
-- T-shaped elements 14 and cross-shaped elements 15;
-- connecting boxes for through cables 16 and for end cables 17;
-- basic junctions 18 for the mutual connection of the segments and elements of the waveguide, of the boxes 17 and of other elements specified hereinafter.

Each one of the waveguide elements 11 to 15 comprises a plurality of ducts 20, for example four: three phase ducts and one neutral duct. The ducts 20 have an axial cavity 21 with a rectangular profile, which is delimited by walls 201, 202 whose thickness determines the surface of the current passage section and consequently determines the useful capacity of the waveguide. Waveguides with various capacities, for example comprised between 400 and 6000 amperes, may be obtained by varying the thickness of the ducts toward the inside of the axial cavity 21, as shown in broken lines in figure 2b, thus keeping unchanged the external dimensions of said ducts. The ducts may be made of electrolytic copper or aluminum and are preferably obtained by hot extrusion from corresponding billets. Their external surface is covered with an insulating sheath 22 which is retained on the ends by a possible adhesive tape 23 (figure 2) and is preferably constituted by silicone rubber of temperature class H, vulcanized directly onto said ducts.

The ducts 20 are gathered in a pack and the pack, which is further covered by an insulating sheet 24, is accommodated and contained in a metallic protection casing 30 which also acts as supporting structure and as possible ground conductor. The insulating sheet 24 is preferably made of a material known by the trade-name "Nomex", which also belongs to temperature class H.

The metallic casing 30, which gives the waveguide a high degree of protection from the environment, is shaped so as to withstand the weight of said waveguide and the high electrodynamic stresses due to short-circuit currents. For this purpose, it is constituted by two oppositely arranged metallic shells 31 and 32 which delimit a box-like body 33 for containing the ducts 20 and a pair of oppositely arranged longitudinal ridges 34 and 35, each of which has a T-shaped profile. The shells 31 and 32 are preferably made of aluminum and are obtained by extrusion; they are connected by a lower raceway 36 and by an upper raceway 37 which are respectively connected to the T-shaped wings of the ridges 34 and 35, for example by means of rivets or bolts 38. The ends of the ducts 20 protrude from the casing of the structure 30 by an amount which has a convenient length, for example 5 cm, for electrical connection to the ducts of the adjacent waveguide elements; said connection is performed by means of the basic junctions 18.

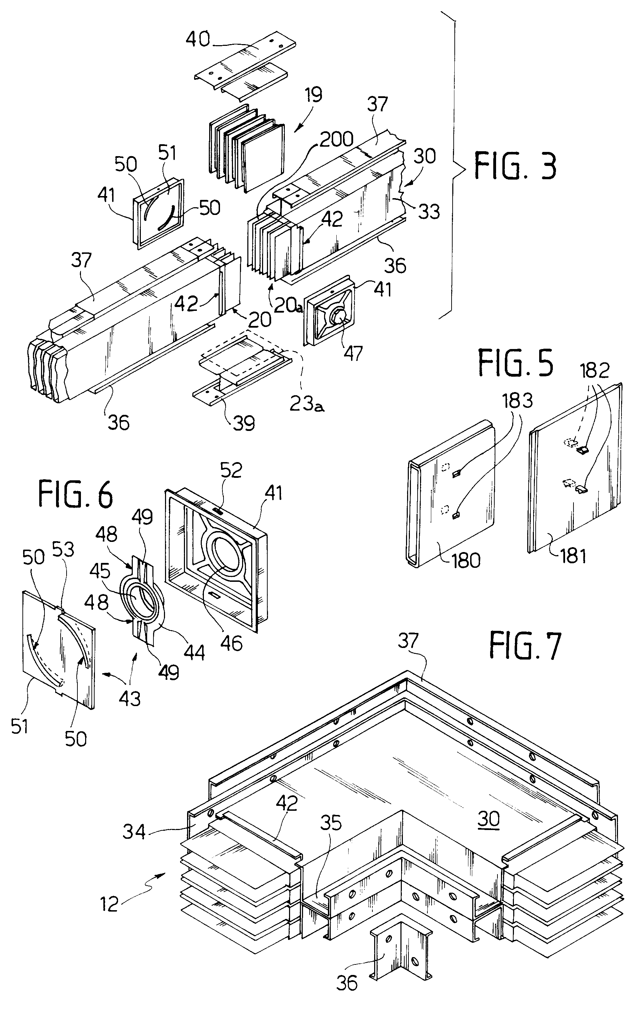

The junctions 18 comprise removable metallic inserts 180 which are accommodated in the cavities 21 of facing ducts, such as 20,20a, shown in figures 1 and 3. The inserts 180, equal in number to the ducts 20, are also assembled, so as to form a connection pack 19, with insulating plates 181 interposed; the transverse dimension of the pack 19 is substantially equal to the transverse dimension of the duct pack, by virtue of the fact that said inserts are accommodated in the spaces which correspond to the cavities 21 of said ducts. The insulating plates 181 are connected to the inserts 180 by means of spacers 182 which are supported by said plates and fit with a snap-together action in corresponding slots 183 of said inserts 180. The pack 19 is inserted between the facing ends 20,20a of the ducts, forcing it at right angles to the axis of said ducts as shown by the arrow of figure 3, and for this purpose openings 200 are formed on the ends of the ducts 20 by removing material on at least one, but preferably on both, of the smaller faces 201 of the ducts 20 (figure 2a). Consequently, the end of each duct is substantially fork-shaped (figures 2 and 3) and accommodates, inside it, the corresponding insert 180 of the connection pack 19, whereas the insulating plates 181 of said pack fit in the interspaces 203 which are comprised between one duct and the next and are the result of the prior removal of the insulating covering 22 in the connection region. The electrical junction thus obtained is concealed and protected by a pair of covers 39,40, which are associated below and above the ridges 34,35 of the structure 30 with an insulating sheet 23a interposed, and by lateral flanges 41 which are drawn in the shape of a bell and fit in L-shaped retention guides 42 provided on the shells 31 and 32 (figure 3).

According to the invention, cam means 43 are associated with the lateral flanges 41 and act transversely to the ducts 20; said cam means are suitable to clamp the pack 19 and the fork-shaped ends of said ducts.

As clearly shown in figure 6, the means 43 of each flange 41 include a pusher element 44 with a cylindrical tang 45 which is freely rotatably accommodated in a corresponding seat 46 of the flange and ends with a hexagonal head 47 which protrudes outside said flange. On the inner side of the flange 41, the pusher element 44 is provided with a pair of oppositely arranged arms 48, on each of which a protruding ridge 49 is formed by drawing. The ridges 49 are in contact with corresponding front cam-shaped ridges 50 also formed by drawing on a pusher plate 51 which is associated with the flange 41 so that it can move axially, for example by means of cooperating slots 52 and ridges 53. When the flanges 41 are mounted oppositely in the corresponding retention guides 42, the respective pusher plates 51 face the insulating plates 181 arranged at the ends of the pack 19 and consequently the rotation of the pusher elements 44, performed by means of a wrench, by moving the pusher plates 51 against the insulating plates 181, causes the clamping of the elements of the pack 19 and of the ends of the ducts 20.

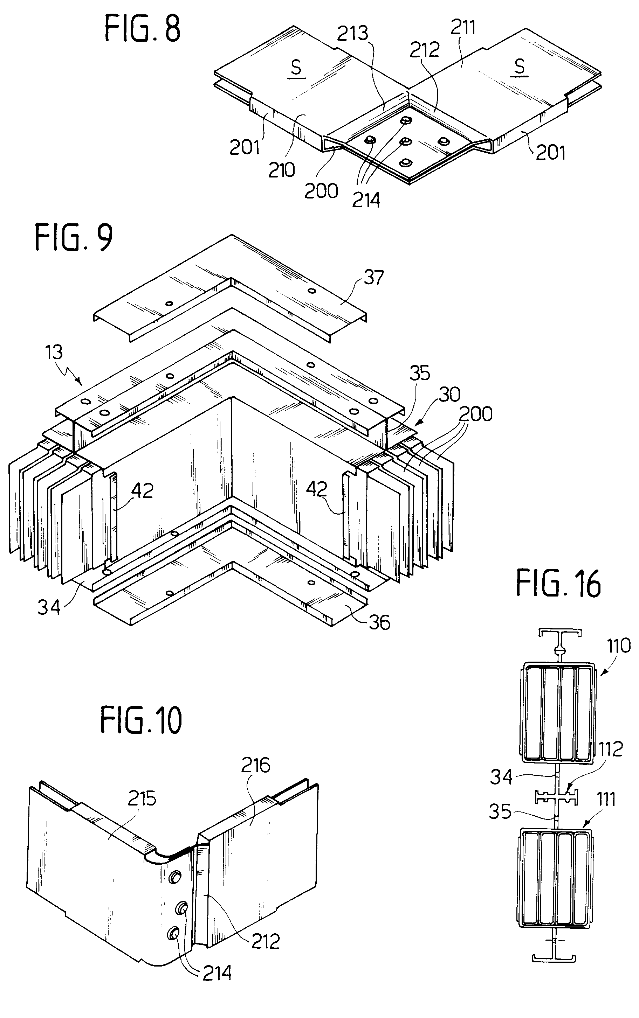

The fork-like shape of the free ends of the ducts 20 and the shape of the shells 31 and 32 of the casing 30 are common to all the components of the waveguide which are connected by basic junctions 18. In the flat angular element 12 of figure 7, the casing 30 is L-shaped on the plane of arrangement of the hollow ducts and consequently the connecting raceways 36 and 37 form a dihedral angle. The ducts are constituted by duct segments 210,211 which are mutually joined at right angles, as shown in figure 8. For this purpose, the ends of the duct segments which are opposite to the ones meant to cooperate with the junctions 18 are given a fork-like shape by removing material on both of the smaller faces 201 of said segments, and the fork tines of the segment 211 are depressed, with inclined blending portions 212, so as to accommodate inside them the fork tines of the segment 210 which are arranged mutually adjacent by means of corresponding inclined blending portions 213. The resulting metallic pack is fixed by nails 214 which, by virtue of the presence of the inclined blending portions 212 and 213, do not protrude beyond the surface S of the segments 210,211. In the dihedral angular element 13 of figure 9, the planes of arrangement of the ducts form, between them, a dihedral angle (which may be different from 90^{o}), the structure 30 correspondingly forms a dihedral angle and the connecting raceways 36 and 37 form planar angles. In this case, too, the ducts are constituted by duct segments 215,216 which are mutually connected so as to form a dihedral angle as shown in figure 10. Connection is produced by means of nails or bolts 214 which, in this case too, do not protrude beyond the surfaces of the segments by virtue of the presence of inclined blending portions 212.

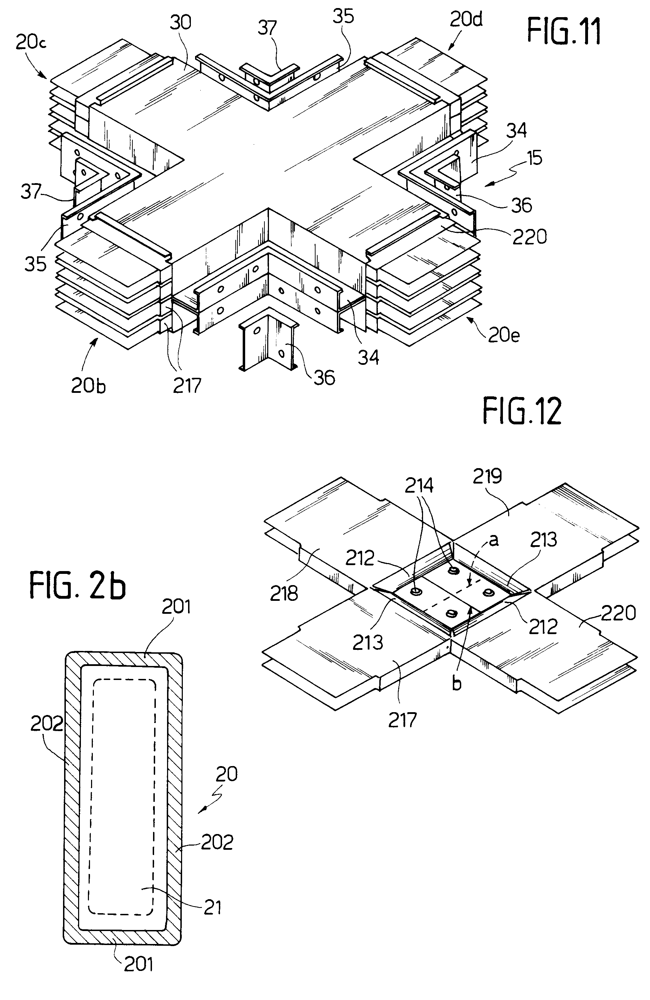

Figure 11 illustrates a flat cross-like element with a structure 30 provided with four connecting terminals 20b, 20c,20d and 20e, each of which is suitable to receive a corresponding junction 18. Correspondingly, the ducts of said element are constituted (figure 12) by four duct segments 217,218,219,220 which partially overlap in their mutual connection region, as shown by the dashed line "a" and by the solid line "b". Connection is provided by means of nails or bolts 215 which do not protrude beyond the surface of the segments by virtue of the recessed arrangement of the connecting region which is obtained by means of inclined blending portions 212,213.

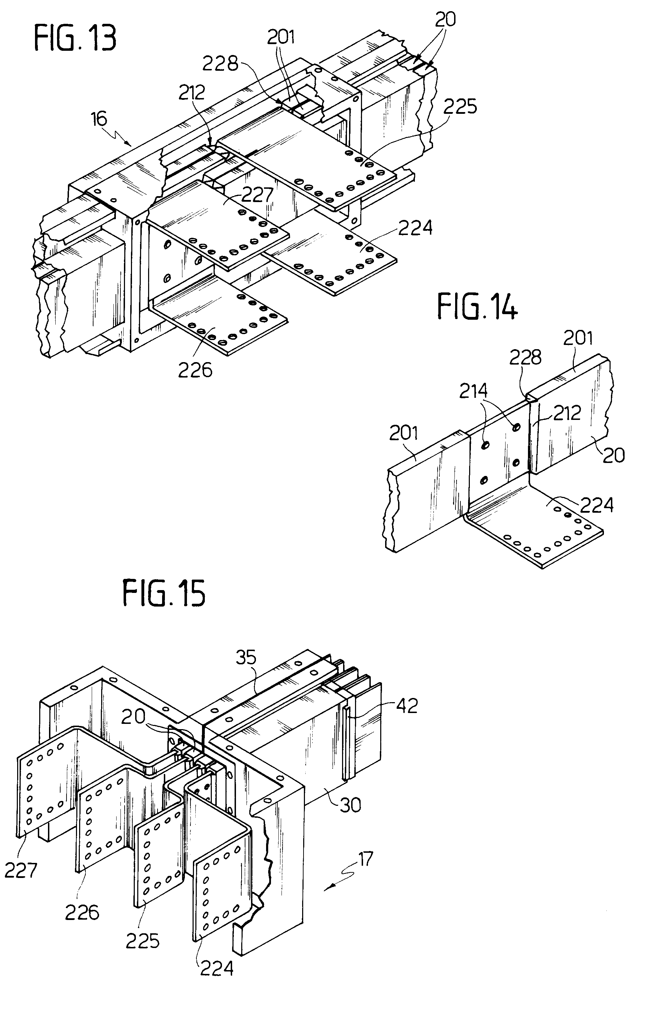

Figure 13 illustrates the detail of a through box 16 for cable connection, with four connecting plates 224,225, 226,227 shunted from the phase and neutral conductors and arranged in opposite pairs in order to limit bulk. The connecting plates are bent in the shape of the letter L and fit, as shown in the detail view of figure 14, in the cavity of the corresponding ducts 20 by passing in respective openings 228 formed by removing material from the opposite smaller faces 201 of said ducts. In this case, too, the connection between the ducts and the shunt plates is provided by means of nails or bolts 214, and the connecting region is depressed with respect to the surface of the ducts by means of inclined blending portions 212.

Figure 15 is a detail view of a terminal box 17 for cable connection, whose structure is immediately understandable on the basis of the above description and of the reference numerals which designate parts which are similar to, or correspond to, the parts of the through box 216.

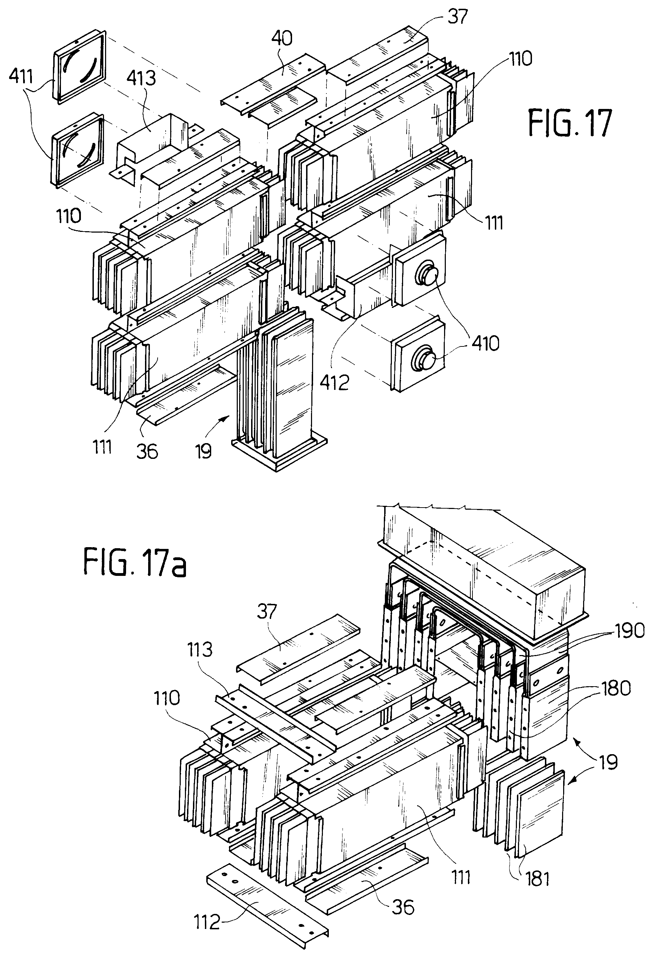

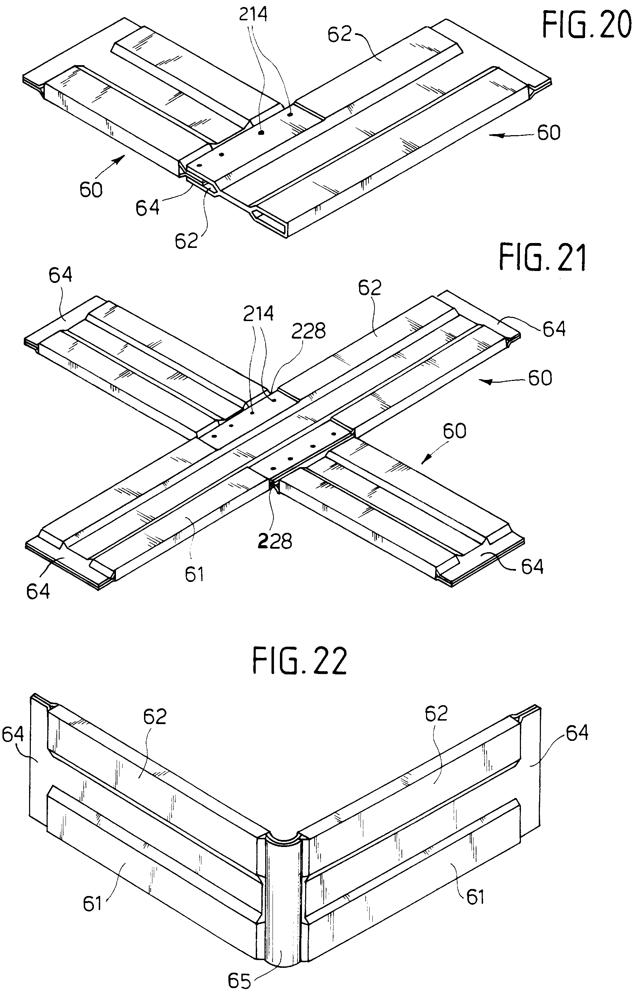

When capacities in excess of the maximum limit within which the external dimensions of the ducts 20 do not change are required, two or more waveguides as described can be electrically and mechanically connected in parallel. Figure 16 illustrates the method for the mechanical connection of two straight modular elements 110,111, which is performed by mutually superimposing said elements and by connecting them at the wings of the adjacent and oppositely arranged ridges 34 and 35, after removing the raceways 36 and 37; connection is performed by means of bolts or nails 112. Figure 17 is a perspective view of a double basic junction for the electrical connection of modular elements in parallel according to the arrangement of figure 16. It is stressed that the connecting pack 19 has such a height H that it simultaneously fits between the four ends of the facing ducts and that lateral protection covers 412,413 are interposed between the superimposed pairs of lateral flanges such as 410,411 and are connected by means of screws to the T-shaped wings of the stiffening ridges 34,35 of the respective waveguide elements.

Figure 17a illustrates a different method for parallel connection, according to which the modular elements 110,111 are arranged side by side instead of being superimposed and are mutually connected by cross-members 112,113 which are screwed to the wings of the corresponding ridges 34,35. The same figure shows that in this case the corresponding metallic inserts 180 of the connecting packs 19 are mutually parallel connected by bridge-like ducts 190.

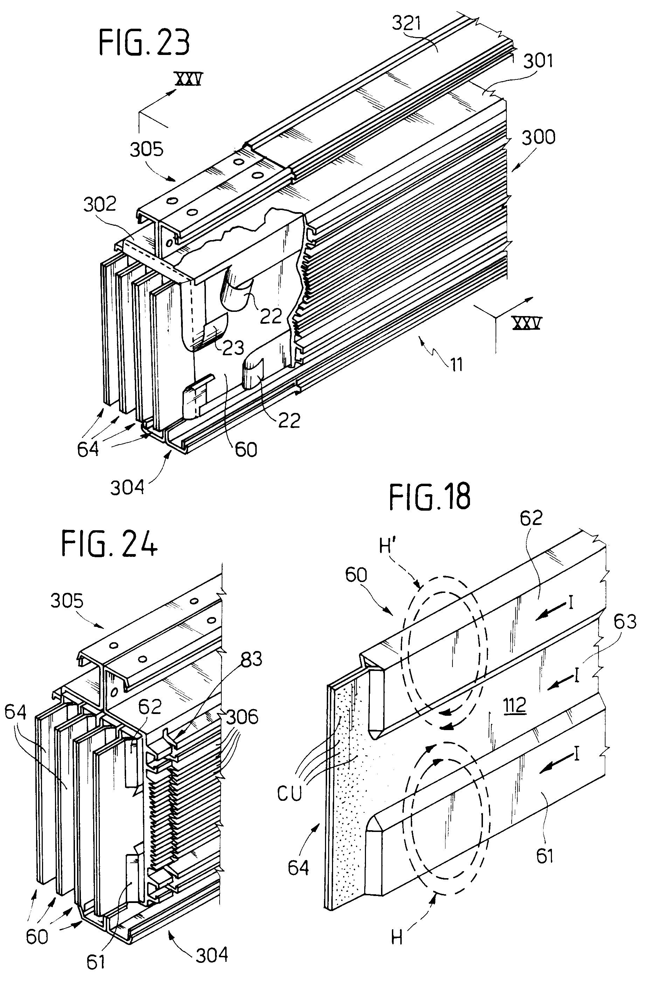

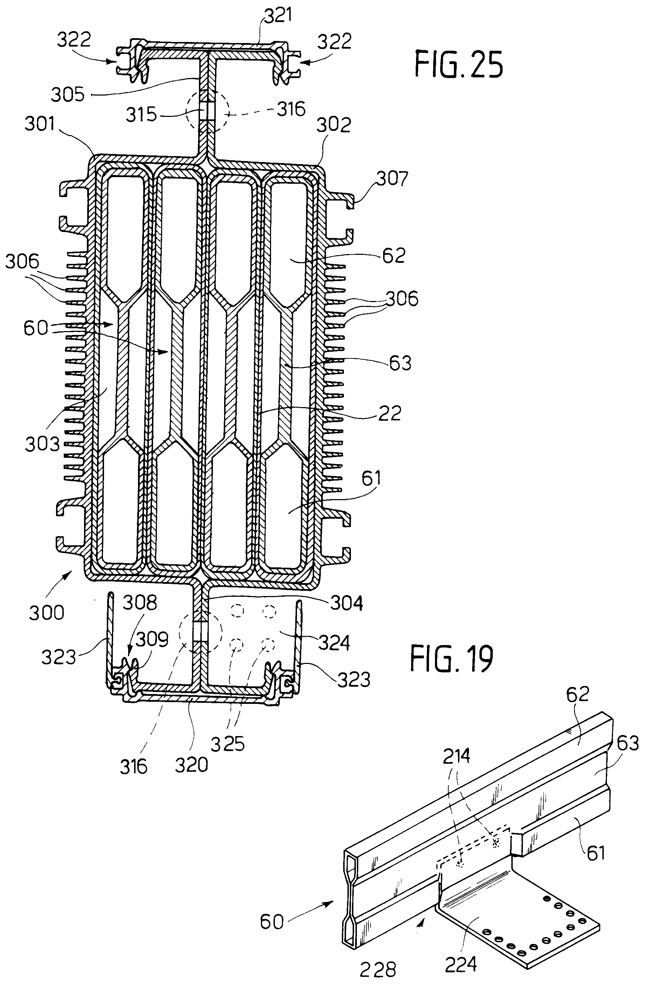

In the embodiment of figures 18 to 30, which constitutes a preferred embodiment of the invention, each duct 60 has two oppositely arranged hollow portions 61,62 which are linked by a solid central rib 63. The ducts 60 are individually insulated, with a sheath or taping 22 made of silicone rubber of temperature class H, and are arranged so as to form a pack inside the casing 300; the two heads of the pack are in turn protected and insulated from the casing 300 for example by bands of an insulating material 23 known by the trade-name "Mylar". The ducts 60 are made of aluminum and are obtained by hot extrusion from corresponding aluminum billets. If the thickness of the ducts is relatively low, for example within 10 to 30 tenths of a millimeter, the ducts 60 may also be made of copper with the same hot extrusion process.

At their ends, the ducts 60 protrude from the casing 300 (figures 23 and 24) and have a flattened portion 64 for electrical connection to corresponding flattened portions of the ducts of adjacent waveguide segments or of other modular elements, for example angular elements or the like, or to cable connection boxes. In the case of aluminum ducts 60, the flattened portion 64 is preferably covered with copper powder which has the purpose of protecting the electrical contact region against the forming of insulating oxides.

For this purpose, the flattened portion 64 of the duct is preliminarily sandblasted on its surface and then covered with a layer CU of copper powder (figure 18) applied with the known heat-projection system, which uses an oxyacetylene torch combined with a source of compressed air which projects the powdered metal. Similarly, it is possible to apply a layer of tin or copper or a subsequent layer of tin over the previous copper layer.

The arrangement of the duct 60 with oppositely arranged cavities 61 and 62 gives said duct a cross-section which is substantially shaped like the numeral 8, which significantly improves the distribution of the magnetic field that surrounds said duct. Each cavity 61,62 is in fact surrounded by a respective magnetic field H-H' (figure 18) which has lines of force directed clockwise or counterclockwise depending on the direction of the current I which flows through the duct. The fields H-H' in any case have the same direction and therefore cancel each other out, as shown by the arrows of figure 3. In any case, the ducts maintain their characteristics related to the presence of the cavities 61,62, which facilitate both the connections of the cable shunting plates and the mutual connections between the ducts as well as the insertion of junction boxes.

Thus, for example, figure 19 shows that a cable shunting plate 224 enters the cavity 61 of a duct 60 by passing through an opening 228 of said cavity and is compressed at the plate; connection is completed by nails or bolts 214 which pass through the duct and the plate, in the previously described manner.

Figures 20 and 21 illustrate L-shaped or cross-shaped connections of two and respectively four ducts 60. In these cases, as clearly shown by said figures, the flattened end portion 64 of one duct enters the cavity 62 and respectively the cavities 61,62 of the adjacent duct, passing through openings 228 of said cavity or cavities, and is connected by means of nails or bolts 214 which pass through both of said ducts.

Figure 22 illustrates the dihedral bend of a duct 60 and shows that the cavities 61,62 are flattened in the bending regions so as to form a cylindrical blending portion 65 which is interposed between the two duct portions.

The casing 300 is also made of aluminum and is also obtained by hot extrusion. Since the useful section of the ducts 60 can be changed within a wide range, with equal external dimensions, by varying only the thickness of the material toward the inside of the hollow portions 61,62, the casing 300 maintains its external dimensions as the useful capacity of the waveguide varies within a wide range, for example comprised between 400 and 6000 A. Correspondingly, it is possible, without negatively affecting the overall cost of the waveguide, to significantly improve the structure of the casing 300 by providing it with profiles, so long as they can be extruded, which significantly improve the functionality and rigidity of said casing.

Substantially, the casing 300 is formed by two juxtaposed shells 301 and 302 (figures 23,24,25), each one of which delimits a cavity 303 for containing the ducts 60 and two T-shaped ridges, respectively a lower one 304 and an upper one 305. The external walls of the shells are provided with cooling fins 306 and with channel-shaped stiffening ridges 307. Oppositely arranged undercuts 308 are formed on the wings of the T-shaped ridges 304,305 and are engaged by the corresponding teeth 309 of respective lower and upper connecting plates 320,321. In turn, the plates 320,321 are provided with grooves 322 which allow to insert shields 323, each one of which is provided with a basic ridge with a profile shaped complementarily to the profile of the grooves 322. The shields 323 delimit channel-shaped spaces 324 which are suitable to contain conductors 325 for control, signal transmission and/or low-voltage power distribution, for example for lighting systems. On the rib of the T-shaped ridges 304,305 there are also holes 315 for the passage of nails or bolts 316 which connect the half-shells of the casing.

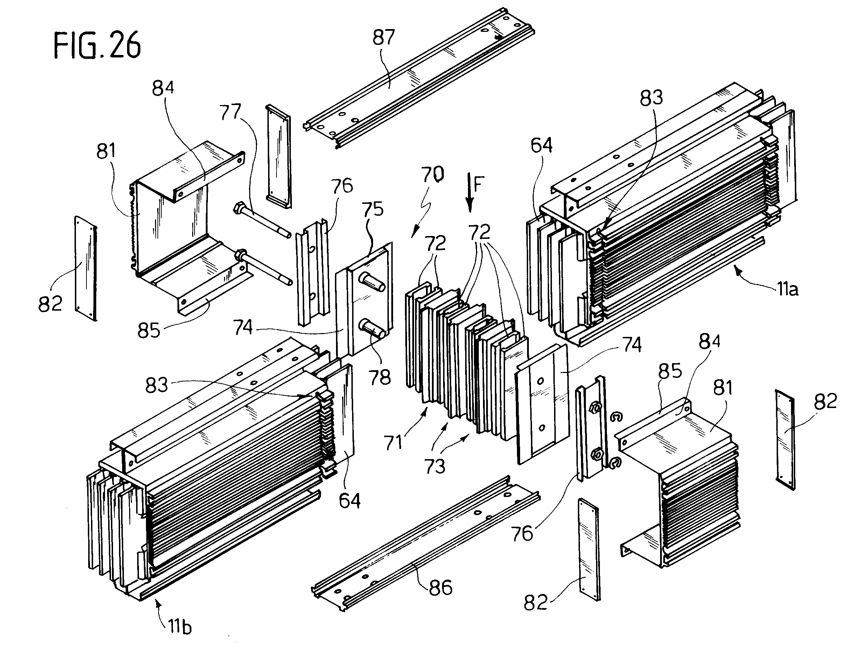

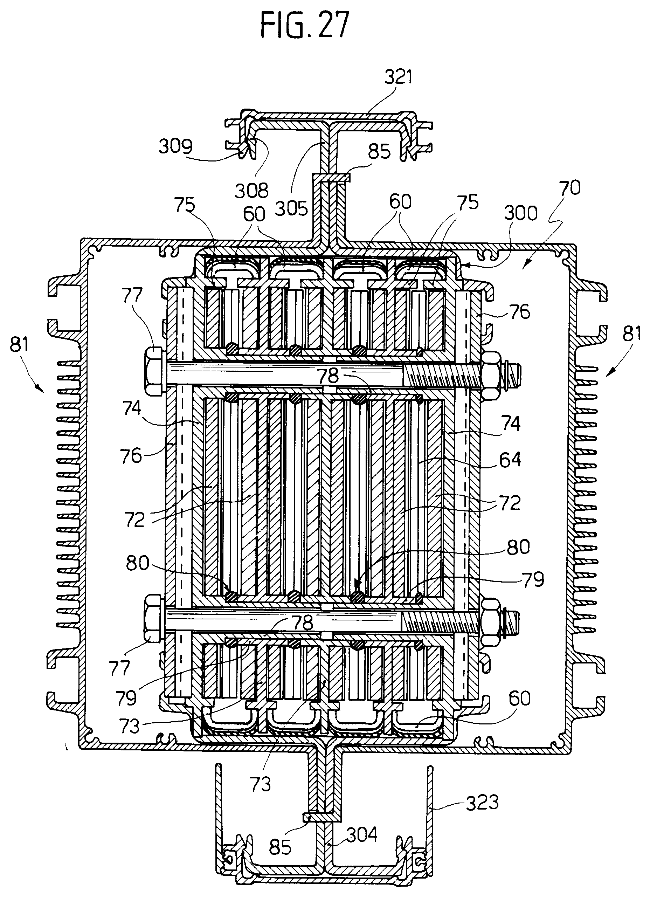

Figures 26 and 27 illustrate a basic junction 70 for the mutual electrical and mechanical connection of two straight waveguide segments 11a,11b or of a straight segment to T-shaped or cross-shaped elements (not shown) provided with an external shell such as 300 which is correspondingly structured in the shape of the letter L or of a cross, and of ducts 60 which are mutually connected as in figures 21 or 22 respectively, and all of which ends with flattened portions 64.

The basic junction 70 comprises a junction pack 71 which is formed by pairs of conducting plates 72 which are suitable to clamp the flattened ends 64 of the respective oppositely arranged ducts 60, between which intermediate and terminal insulating spacers 73 and 74 are interposed. The spacers 73,74 are provided with seats for the respective conducting plates 72, delimited by ridges 75 (figure 27), and the pack of plates and spacers is clamped by a pair of metallic flanges 76 which are subjected to the traction of clamping bolts 77 which pass through said pack.

As clearly shown in figures 26,27, the terminal spacers 74 are provided with cylindrical guides 78 for the clamping bolts 77. Corresponding cylindrical portions 79 of the intermediate spacers 73 are fitted on the guides 78, and elastomeric rings 80 are advantageously interposed between said cylinder portions; said rings have the purpose of keeping the spacers spaced prior to the tightening of the bolts 77, in order to facilitate the insertion of the junction pack 71 on the flattened terminals 64 of the oppositely arranged ducts 60. Alternatively, the elastomeric rings may be replaced with elastomeric spacers interposed between the conducting plates 72.

Insertion occurs in the direction of the arrow F of figure 26, at right angles to the ducts 60. The pack 71 is in position when the upper portion of the ridges 75 of the terminal spacers 74 makes contact with the flattened portion 64 of the terminal ducts (figure 27).

With the pack in this position, the bolts 77 are tightened, and the pairs of conducting plates 72 clamp the respective flattened ends of the ducts of the oppositely arranged segments 11a,11b, deforming the rings 80. Electrical contact occurs preferably along protruding ridges (shown in figure 26) provided on the internal faces of the plates 72. The junction 70 is completed by lateral covers which are formed by aluminum shells 81 which have the same profile and the same set of fins as the casing 300 but have a larger transverse dimension. The covers 81 are closed by lateral walls 82 which enter grooves 83 provided on the casing 300 of the segments 11 at their ends. Each lid 81 is also provided with resting feet 84 which are meant to adhere to the rib of the T-shaped ridges 303,304. One of the two resting feet has an L-shaped tab 85 which fits in a through slot provided on said rib of the T-shaped ridge. The covers 81 are fitted symmetrically, as shown in figure 27, so that the L-shaped tab 85 of one cover enters the slot of the upper ridge 305 and the tab of the other cover enters the slot of the lower ridge 304. A pair of plates 86,87, respectively a lower one and an upper one, completes the junction, connecting the ridges 304,305 of the adjacent segments 11a,11b.

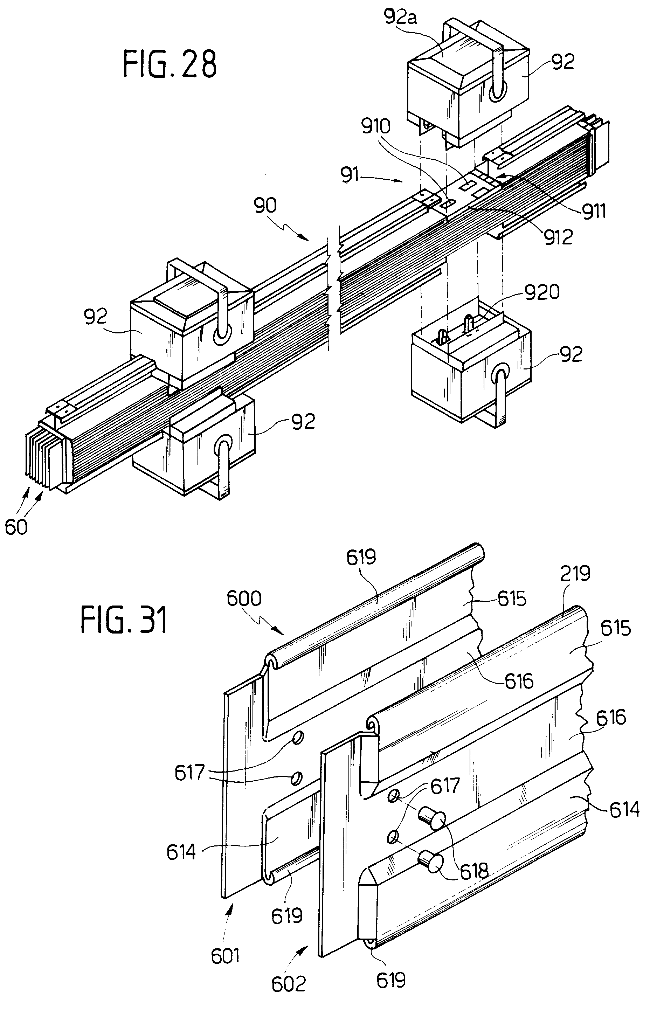

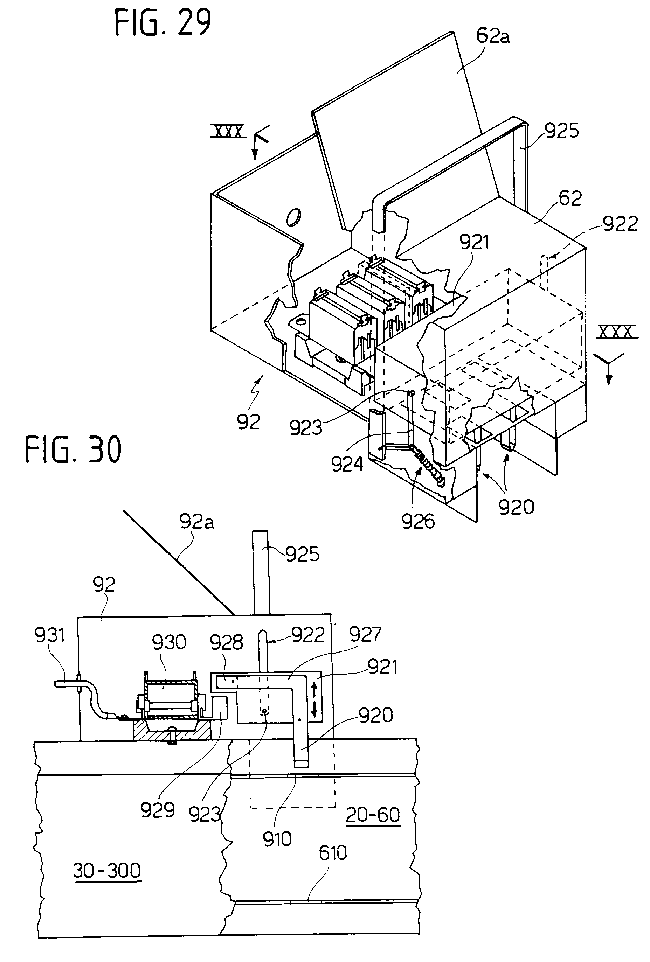

Figures 28 and 30 illustrate a straight distribution element 90 which is provided with taps 91 for removable junction boxes 92 provided with an access door 92a. The straight element 90 can be used in combination with any one of the waveguide elements 11 to 18 to supply power to variously located user points. The taps 91 are constituted by engagement openings 910 provided on the smaller faces of the ducts 20 or of the ducts 60 and by respective openings 911 provided correspondingly on the protective and supporting structure 30 or 300, at which the ducts can be accessed. A plate of insulating material 912, provided with corresponding openings which are aligned with the engagement openings 910, is inserted in the openings 911 for protection against accidental contacts with the ducts 20,60. The engagement openings 910 are suitable to receive corresponding elastic contact clamps 920 which are associated with the individual junction boxes 92 are suitable to enter the cavities of the corresponding ducts 20 or 60 to provide the electrical connection of said boxes. According to the invention, the clamps 920 are mounted so that they can move in the respective box 92 and can assume, with a snap-together action, a connection position, in which they protrude from the box to engage the cavities of the ducts, and a disconnection position, in which they are retracted inside said box. For this purpose, the clamps 920 are supported by a support 921 (figure 29) which can move with respect to the box 92 and is guided by cooperating slots 922 and pivots 923. The support 921 is connected, by means of toggle connecting rods 924, to an actuation handle 925 which is pivoted to the box 92 and can oscillate in the directions of the arrows of figure 29. Respective elastic struts 926, articulated to the box 92, cooperate with the connecting rods 924. The arrangement is such that by turning the handle clockwise, the support 921 is initially lowered and the springs of the struts 926 are consequently loaded; when the dead center of the connecting-rod articulation has been passed, said springs complete, with a snap action, the lowering of said support, with the consequent engagement of the clamps 920 in the cavities of the respective ducts. The disengagement maneuver occurs in the same snap-action manner, by actuating the handle 925 in reverse. Advantageously, according to the invention, the movement of the support 921 is used to produce a double disconnection of the circuit shunted from the box 92. For this purpose, the clamps 920 are arranged at one end of L-shaped laminae 927 which are rigidly coupled to the support 921 (figure 30). The other end 928 of said laminae has the shape of an elastic fork so as to engage, when the support 921 is in lowered position, corresponding fixed knife contacts 929 which are connected to the shunting cables 931 with fuses 930 interposed.

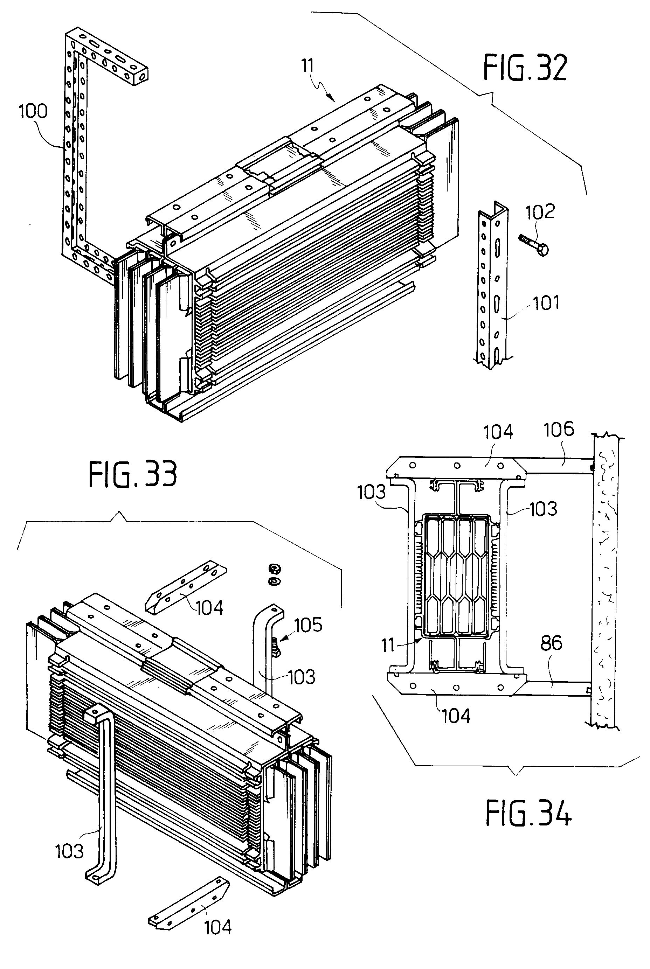

Figure 31 illustrates another embodiment of the invention, which relates to a different method of providing the double-cavity ducts. According to this embodiment, which is suitable for the manufacture of copper ducts of such a thickness that they cannot be extruded economically, the duct 600 is obtained by juxtaposing a pair of mirror-symmetrical half-ducts 601,602, each produced by plastic deformation, for example by roll forming, of a corresponding copper strip. Each half-duct 601,602 is provided with two corresponding half-cavities 614,615 which are meant to form the opposite and parallel axial cavities of the duct 600 which is the result of the juxtaposition of the half-ducts 601,602. The half-cavities 614,615 are blended by a flat portion 616, and on the flat portions there are through holes 617 which are suitable to receive bolts or nails 618 which are used to connect the two half-ducts.

As clearly shown in figure 31, at the outer edge of the half-cavities 614,615 there is a prism-like fold or a cylindrical curl 619. The half-ducts make mutual contact at said flat portion 616 and along the sides of the folds or respectively along the generatrices of the curls 619 which are arranged oppositely, and this causes the electrically useful sections of each half-duct to be strictly identical. Contact along said folds or curls in fact compensates for any differences in the width of the strips from which the half-ducts are produced.

Figures 32 to 34 illustrate suspension means for the waveguide according to the present invention.

In the embodiment of figure 32, the suspension means is constituted by a U-shaped bracket 100 and by an upright 101 which is meant to be connected to a masonry or metal support. The bracket and the upright are mutually connected by bolts 102 and surround the elements 11, clamping them firmly.

In the embodiment of figures 33 and 34, the suspension means is constituted by two uprights 103 and by two cross-members 104 which are connected by bolts 105. The cross-members 104 have a U-shaped profile to receive corresponding bracket-like supporting arms 106.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Prefabricated modular waveguide for carrying and distributing low- and medium-voltage electric power, which comprises straight elements, angular elements, cross-shaped elements, T-shaped elements and the like, junctions for the mutual connection of said elements, fixed junction boxes, straight distribution elements with removable junction boxes; each one of said elements comprising ducts which are assembled in a pack and are accommodated, with the interposition of insulating material, in a metallic protective casing which has a supporting function; characterized in that the ducts (20,60) have at least one axial cavity (21,61,62) delimited by walls (201,202) the thickness of which determines the surface of the current passage section and consequently the nominal capacity of the waveguide; in that the area of said current passage section is increased or reduced in order to correspondingly vary the nominal capacity of the waveguide between preset maximum and minimum values by varying the thickness of the walls (201,202) toward the inside of the cavity of the ducts, so that the external dimensions of said ducts are constant for all waveguides with capacities comprised between said maximum and minimum values; in that the empty space which corresponds to the cavity or cavities (21) of the ducts is used to accommodate a pack (19,71) of electrical connection inserts which are interposed between the facing ducts of the adjacent modular elements (11a,11b); said pack of inserts consequently having overall transverse dimensions substantially equal to the transverse dimensions of the duct pack; and in that the protective casing (30,300) which contains the ducts is formed by a pair of mirror-symmetrical and oppositely arranged half-shell elements (31,32;301,302) which have a standardized profile and constant dimensions, within said maximum and minimum capacity values, which correspond to the invariant external dimensions of said duct pack; said half-shell elements being mutually connected by removable connection means.

2. Waveguide according to claim 1, characterized in that the ducts (20) have a single axial cavity (21), have an annular rectangular cross-section and are covered by an insulation layer (22) which extends along the entire external surface of said ducts; in that the ducts of adjacent modular elements and segments are electrically connected by means of basic junctions (18) which include removable electrical connection metallic inserts (180) which are accommodated in the cavities of the facing ducts and adhere to the internal surfaces of said cavities; and in that presser means (41,48,51) are associated with the casing (30) of the protective structure and act transversely with respect to the ducts; said presser means being suitable to clamp in a pack the adjacent ends of the ducts and the removable electrical connection inserts (180) accommodated in the cavities (21) of said ducts (20).

3. Waveguide according to claims 1 and 2, characterized in that each duct (20) is provided with connectable ends, on each of which there is at least one opening (200) for connection to the cavity (21) of the duct; in that said opening (200) is formed by removing material on at least one of the smaller faces (201) of the duct; and in that the electrical connection insert (180) is accommodated in the cavity (21) of the duct through said opening or openings (200).

4. Waveguide according to claims 1 to 3, characterized in that the connectable end of each duct (20) comprises a pair of oppositely arranged communication openings (200); said end being consequently fork-shaped.

5. Waveguide according to the preceding claims, characterized in that the electrical connection inserts (180) are mutually assembled, with the interposition of insulating plates (181), so as to form a connecting pack (19); and in that the insulating plates and inserts are mutually connected by means of spacers (182) which are supported by the plates and fit with a snap-together action in corresponding slots (183) of the inserts (180).

6. Waveguide according to claims 1, 3 and 5, characterized in that the connection pack (19) is forced between the facing ends of the ducts (20) at right angles to the axis of said ducts, so that the metallic inserts (180) enter the cavities (21) of the ducts by passing in said communication openings (200) and the insulating plates (181) enter interspaces (203) comprised between one duct (20) and the next which are the result of the removal of the insulation (22) which covers the duct in the connecting region.

7. Waveguide according to claims 1 and 2, characterized in that the protective and supporting structure (30) of each modular element is formed by oppositely arranged metallic shells (31,32) which delimit a box-like body for containing the ducts and at least one pair of ridges (34,35) for stiffening said structure on mutually orthogonal flexing planes.

8. Waveguide according to claim 7, characterized in that the protective and supporting structure (30) of each waveguide element is rigidly connected to the structure of the adjacent element by means of covers (40) and lateral flanges (41) which provide continuity to said structure and conceal the ducts (20) and the electrical connection inserts (180) in the connecting region of said elements.

9. Waveguide according to claims 1, 7 and 8, characterized in that each one of said lateral flanges (41) associated with the protective and supporting structure comprises a presser means (44,50) shaped like a front cam, which is suitable to transversely clamp the ends of the ducts (20) and the electrical connecting pack (19).

10. Waveguide according to claims 1 and 9, characterized in that said presser means comprises a pusher element (44) which can rotate freely with respect to the respective flange (41) and is provided with a pair of arms (48) on each on which there is a protruding ridge (49); and in that the ridges of the arms are in contact with respective cam-shaped front ridges (50) formed on a pusher plate (51) which is meant to adhere, by forced contact engagement, to the correspond insulating terminal plate (181) of said connecting pack (19).

11. Waveguide according to claims 1 and 8, characterized in that said lateral flanges (41) are rigidly coupled to the protective and supporting structure (30) by means of retention and guiding guides (42) which have an L-shaped profile.

12. Waveguide according to claim 1, characterized in that each duct (20) is covered, on its external surface, by an close-fitting layer (22) of elastomeric insulating material which is vulcanized directly on said duct.

13. Waveguide according to claim 13, characterized in that said layer (22) of elastomeric insulating material is constituted by silicone rubber.

14. Waveguide according to claim 1, characterized in that said pack of ducts is wrapped with sheets (24) of insulating material known by the name "Nomex".

15. Waveguide according to one or more of the preceding claims, characterized in that it comprises flat angular elements (12) and dihedral angular elements (13), T-shaped and cross-shaped elements (15), each of which has a corresponding protective and supporting structure (30) which is respectively L-shaped, dihedral, T-shaped and cross-shaped, each provided with ducts constituted by segments of hollow ducts (20) which are butt-joined by virtue of junction ends which are fork-shaped and mutually interpenetrate.

16. Waveguide according to claim 15, characterized in that the junction region of said duct segments is depressed by means of inclined blending portions (212,213) of the fork-shaped junction ends and in that the junction is provided by means of nails or bolts (214) which, by virtue of the depression of the junction region, do not protrude with respect to the surface of the duct segments (20).

17. Waveguide according to claim 1, characterized in that it comprises through boxes (16) for the connection of cables with plates (224 to 227) for the connection of cables, each of which has a portion which fits in the cavity (21) of the corresponding duct (20) by passing in openings (228) provided on the opposite smaller faces (201) of said duct.

18. Waveguide according to claim 1, characterized in that it comprises straight distribution elements (90) provided with taps (91) for removable distribution boxes (92); and in that said taps (91) comprise engagement openings (910) which are provided on the smaller faces of each duct (20,64) and are aligned with passage openings (911) correspondingly provided on the protective and supporting structure (30,300).

19. Waveguide according to claim 18, characterized in that the distribution boxes (92) comprise movable contacts (920) which are suitable to be received in the cavities (21, 61,62) of respective ducts (20,60) through said engagement openings (910) and can selectively assume, with a snap action, an extracted connection position and a retracted disconnection position.

20. Waveguide according to claim 19, characterized in that said movable contacts (920) are constituted by elastically yielding clamps which are supported by a movable support (921) which is connected, by means of connecting rods (924) and elastic struts (926) which define dead-center articulations, to an actuation handle (925); said dead-center articulation being suitable to produce the snap-action transfer of the movable contacts (920) from the retracted position to the extracted position and vice versa.

21. Waveguide according to claims 19 and 20, characterized in that the clamps which constitute the movable contacts (920) are arranged at one end of corresponding L-shaped laminae (927) which are rigidly coupled to said movable support (921) and in that a fork (928) is formed at the other end of the laminae, said fork being suitable to engage, when the clamps are in extracted position, corresponding fixed knife contacts (929) which are connected, with the interposition of fuses (930), to the respective shunting cables (931).

22. Prefabricated modular waveguide for carrying and distributing low- and medium-voltage electric power, comprising straight waveguide portions and composable modular elements, each of which comprises externally insulated ducts which are assembled in a pack and are accommodated in a metallic protective casing which has a supporting function, characterized in that each duct (60) is provided with two parallel axial cavities (61,62) which are linked by a flat central rib (63) in that the cross-section of each duct is substantially shaped like the numeral 8; and in that the magnetic fields (H-H') which surround each cavity of the duct cancel each other out.

23. Waveguide according to claim 22, characterized in that said ducts (60) with two axial cavities have a flattened end portion (64) which is suitable to cooperate with means (71) for the electrical and mechanical connection of the corresponding duct portions of the adjacent modular elements or segments of the waveguide.

24. Waveguide according to claims 22 and 23, characterized in that said ducts (60) are made of aluminum and are obtained by hot extrusion from corresponding billets.

25. Waveguide according to claims 22 and 23, characterized in that said ducts (60) are made of electrolytic copper and are obtained by hot extrusion from corresponding billets.

26. Waveguide according to claim 24, characterized in that the flattened end portion (64) of the ducts (60) is covered by a layer of protective metal (CU) deposited by thermal projection.

27. Waveguide according to claim 22, characterized in that the ducts (60) are obtained by juxtaposing a pair of mirror-symmetrical half-ducts (601,602) (figure 31), each of which is obtained by plastic deformation of a corresponding metallic strip.

28. Waveguide according to claim 27, characterized in that each half-duct (601,602) is provided with two half-cavities (614,615) which are linked by a flat portion (616); and in that the two juxtaposed half-ducts (601,602) are connected by nails or bolts (617) which pass through holes provided in said flat portion (616).

29. Waveguide according to claims 27 and 28, characterized in that a fold or curl (619) is formed at the external edge of each half-cavity (614,615) of the half-ducts (601,602); and in that the half-ducts make mutual contact at said flat portion (616) and along the oppositely arranged folds or generatrices of the curls (619).

30. Waveguide according to claims 22 and 23, characterized in that said electrical and mechanical connection means include a junction pack (71) formed by pairs of conducting plates (72) which are suitable to clamp the flattened ends (64) of the oppositely arranged ducts (60); intermediate and terminal insulating spacers (73, 74) are interposed between the pairs of plates.

31. Waveguide according to claim 30, characterized in that the pack of the conducting plates (72) and of the spacers (73) is clamped by a pair of metallic flanges (76) which are subject to the traction of locking bolts (77) which pass through said pack (71).

32. Waveguide according to claims 30 and 31, characterized in that the terminal spacers (73) of the junction pack (71) include cylindrical guides (78) for the locking bolts (77); and in that corresponding cylindrical portions (79) of the intermediate spacers (73) are fitted on said guides and are mutually separated by elastomeric rings (80) which keep the spacers (73) correspondingly separated prior to the tightening of the clamping bolts (77).

33. Waveguide according to claim 22, characterized in that the metallic protective casing (300) is formed by two juxtaposed shells (301,302) made of extruded aluminum, each of which delimits a cavity for containing the ducts (60) and two oppositely arranged T-shaped ridges (304,305); cooling fins (306) being formed on the external surface of said shells (301,302).

34. Waveguide according to claim 33, characterized in that oppositely arranged undercuts (308) are formed on the wings of the T-shaped ridges (304,305) and are engaged by corresponding teeth (309) of plates (320,321) for connecting the shells (301,302) of the casing (300).

35. Waveguide according to claim 34, characterized in that said connecting plates (320,321) are provided with lateral grooves (322) which are suitable to receive corresponding ridges of lateral shields (23) which delimit channel-shaped spaces (324) for containing conductors (325) for control, signal transmission and/or low-voltage power distribution.

36. Waveguide according to claims 30 to 35, characterized in that said electrical and mechanical connection means (71) are protected by covers (81) which are associated with said external metallic casing (300).

37. Waveguide according to claim 36, characterized in that said covers (81) are provided with supporting feet (84) which are meant to adhere to the ribs of the T-shaped ridges (304,305) of the casing (300); and in that one of said resting feet is provided with a right-angled tab (85) which fits in a through slot provided on the rib of a ridge; the covers (81) being mounted symmetrically (figure 27) so that the tab (85) of one cover enters the slot of one ridge and the tab of the other cover enters the slot of the other ridge.

38. Waveguide according to one or more of the preceding claims, characterized in that it comprises means for the suspension of the waveguide segments (11), each of which is constituted by a U-shaped bracket (100) and by a cooperating upright (101).

39. Waveguide according to one or more of the preceding claims, characterized in that it comprises means for the suspension of the waveguide segments (11), each of which is constituted by two uprights (103) and by two cooperating cross-members (104).
